# EUROPÄISCHE PATENTSCHRIFT

(11) **EP 3 448 151 B1**
(45) Veröffentlichungstag und Bekanntmachung des Hinweises auf die Patenterteilung: **14.07.2021**
(21) Anmeldenummer: 17718476.9
(22) Anmeldetag: 31.03.2017
(51) Int. Cl.: A01N 1/02, G01K 11/06

(54) **VERFAHREN UND VORRICHTUNG ZUR TEMPERATURÜBERWACHUNG EINER KRYOKONSERVIERTEN BIOLOGISCHEN PROBE**
METHOD AND DEVICE FOR THE TEMPERATURE MONITORING OF A CRYOPRESERVED BIOLOGICAL SAMPLE
PROCÉDÉ ET DISPOSITIF DE SURVEILLANCE DE LA TEMPÉRATURE D'UN ÉCHANTILLON BIOLOGIQUE CRYOCONSERVÉ

(30) Priorität: 27.04.2016 DE 102016005075
(43) Veröffentlichungstag der Anmeldung: 06.03.2019
(73) Patentinhaber: Fraunhofer-Gesellschaft zur Förderung der angewandten Forschung e.V., 80686 München (DE)
(72) Erfinder: FUHR, Günter R., 13187 Berlin (DE); ZIMMERMANN, Heiko, 97295 Waldbrunn (DE)
(74) Vertreter: v. Bezold & Partner Patentanwälte - PartG mbB
(86) Internationale Anmeldenummer: PCT/EP2017/000404
(87) Internationale Veröffentlichungsnummer: WO 2017/186331

(56) Entgegenhaltungen:
- WO-A1-00/47964
- WO-A1-2007/085385
- DE-A1- 3 716 972
- FR-A1- 3 013 836
- US-A- 3 701 282
- US-A- 5 282 684
- US-A1- 2006 078 036

## Beschreibung

Die Erfindung betrifft ein Verfahren zur Temperaturüberwachung einer kryokonservierten biologischen Probe. Die Erfindung betrifft ferner eine Vorrichtung zur Temperaturüberwachung einer kryokonservierten biologischen Probe.

Die Tieftemperaturkonservierung (Kryokonservierung) von Zellen ist bisher die einzige Möglichkeit, Lebensprozesse auf zellulärer Ebene reversibel (vitalitätserhaltend) so anzuhalten, dass sie nach einer Erwärmung auf physiologische Temperaturen wieder anlaufen können. Die Kryokonservierung hat sich über große Biobanken in den letzten Jahrzehnten zu einem unverzichtbaren Element für Kliniken, Pharmaunternehmen, die Arterhaltung, den Umweltschutz und die Gesundheitsvorsorge entwickelt. Gelagert wird biologisches Material in tieftemperaturverträglichen Probenbehältern (Kryobehältern), z. B. Röhrchen, Straws und Beuteln, unterschiedlicher Größe. Bei der Kryokonservierung sind die gelagerten Biomaterialien unter Aufrechterhaltung der Vitalität des Probenmaterials gefroren, zumeist bei Temperaturen unterhalb -80 °C, für Lebendsammlungen unter -140 °C bis zur Temperatur des flüssigen Stickstoffs. Für eine kryokonservierte Probe oder eine für die Kryokonservierung vorgesehene Probe wird nachfolgend auch der Begriff "Kryoprobe" verwendet.

Für makroskopische Proben, wie z. B. Blut oder Gewebe, sind zahlreiche Techniken zur Probenlagerung bei tiefen Temperaturen entwickelt worden. In der modernen Medizin, Gentechnik und Biologie besteht die Tendenz, zunehmend kleine Proben einer Kryokonservierung zu unterziehen. Es werden beispielsweise kleine Suspensionsvolumina (Milliliter oder darunter) mit suspendierten Zellen oder Zellgruppen eingefroren. Die Kryokonservierung von Zellen aus In-vitro-Kulturen erfolgt in überwiegendem Maße in einer Suspension. Die meisten der biomedizinisch relevanten Zellen benötigen jedoch zu ihrer Vermehrung und geordneten Entwicklung einen Substratkontakt. Daher werden Proben ggf. nach einer Kultivierung im substratgebundenen Zustand eingefroren.

Die Qualität der Proben ist von ausschlaggebender Bedeutung, da sie für Zelltherapien in Kliniken, die Entwicklung von Pharmaka und biotechnologischen Produkten, als nationale Ressourcen und vieles mehr Anwendung finden. Die Lagerzeit liegt bei einigen Tagen bis zu Jahrzehnten, mit einer Tendenz zur Langzeitlagerung. Die Proben werden in gekühlten Behältern gelagert, befinden sich zumeist in Metalleinschüben und Racks, mit denen sie bei neuen Einlagerungen oder Entnahmen Temperaturschwankungen unterliegen. Bei Lebendablagen (Zellen, Zellsuspensionen und Gewebeteilen) spielt nicht nur die ununterbrochene Kühlkette eine entscheidende Rolle, sondern auch die Vermeidung großer Temperatursprünge in der Tiefkühlphase. Da es bei der Entnahme gar nicht so selten vorkommt, dass Kryobehälter sich auf Temperaturen von -80 °C bis -20 °C erwärmen, treten, obwohl sie noch gefroren sind, Qualitätsminderungen unerkannt auf, die nicht nur den Wert der Probe mindern, sondern auch bei ihrer Verwendung im klinischen Bereich zu lebensgefährlichen Situationen führen können. Selbst kurzzeitig aufgetauten Proben sieht man im wiedergefrorenen Zustand nicht an, dass sie dem Originalzustand nicht mehr entsprechen. Es geht aber vornehmlich nicht nur darum, ein Auftauen der Biomaterialien zu erkennen, sondern das Überschreiten einer Grenztemperatur im Bereich zwischen -140 °C und -20 °C zu dokumentieren. Eine Temperaturkontrolle und -dokumentation für jede Probe ist die Forderung und bislang nur selten - und wenn, dann mit hohem technischen Aufwand - zu erfüllen. Hinzu kommen umfangreiche Laboruntersuchungen nach dem Auftauen, die ebenfalls wertvolles Probenmaterial verbrauchen und selbst im Falle inzwischen wertlos gewordener Kryoproben Kosten erzeugen.

FR 3 013 836 A1 offenbart eine Vorrichtung zur Temperaturüberwachung einer kryokonservierten biologischen Probe, bei der eine Indikatorsubstanz und ein Kontrollelement im Hohlraum eines Röhrchens angeordnet sind. Überschreitet die Temperatur einen vorgegebenen Grenzwert, geht die Indikatorsubstanz von der festen in die flüssige Phase über, was zu einer Positionsänderung des Kontrollelements führt. Der Schmelzpunkt der Indikatorsubstanz liegt z.B. bei -138 °C. Es ist eine Aufgabe der Erfindung, ein verbessertes Verfahren zur Temperaturüberwachung einer kryokonservierten biologischen Probe bereitzustellen, mit dem Nachteile herkömmlicher Techniken vermieden werden können und das sich durch eine vereinfachte Verfahrensführung auszeichnet. Eine weitere Aufgabe ist es, eine Vorrichtung zur Temperaturüberwachung einer kryokonservierten biologischen Probe bereitzustellen, mit der Nachteile herkömmlicher Techniken vermieden werden können.

Eine weitere Aufgabe ist es, eine Möglichkeit bereitzustellen, um an einem möglichst einfachen Marker oder Kennzeichen erkennen zu können, ob eine Kryoprobe sich über eine definierbare Grenztemperatur, und wenn auch nur kurzzeitig, erwärmt hat. Die Grenztemperatur muss im Bereich zwischen -20 °C und -140 °C vor dem Einfrieren festlegbar sein. Dies sollte an jeder einzelnen Kryoprobe und an damit Millionen von Proben rasch und leicht erkennbar möglich sein, darf die Biomaterialien nicht verändern und sollte bereits im tiefgefrorenen Zustand erfolgen. Wenn möglich, sollte der Zustand der Probe auch im Lagerbehälter erfassbar sein, da jede Aus- und Einlagerung die Gefahr der Probenveränderung einer Vielzahl von Proben im Lagergut mit sich bringt, da in der Regel ganze Racks aufgezogen werden. Die Vorrichtung bzw. das Verfahren sollte leicht handhabbar, tieftemperaturtolerant und einstellbar sein. Es darf nur wenig oder keine Energie verbrauchen und möglichst nur geringste Kosten verursachen, da die Lagerung einer Bioprobe im gekühlten Zustand in ihren Gesamtaufwendungen nur wenige Euros kosten sollte. Diesem Anspruch müssen auch die einsetzbaren Materialien gerecht werden.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung werden die genannten Aufgaben durch ein Verfahren zur Temperaturüberwachung einer kryokonservierten biologischen Probe gelöst wie in Anspruch 8 definiert.

Zur Durchführung des Verfahrens wird eine Vorrichtung zur Temperaturüberwachung einer kryokonservierten biologischen Probe bereitgestellt.

Gemäß einem zweiten Gesichtspunkt der Erfindung ist die Vorrichtung zur Temperaturüberwachung einer kryokonservierten biologischen Probe als Gegenstand per se offenbart und beansprucht. Die Ausführungen betreffend die Vorrichtung, insbesondere deren vorteilhafte Ausführungsvarianten, sollen somit zur Vermeidung von Wiederholungen als rein vorrichtungsgemäß offenbart und als verfahrensgemäß offenbart gelten und beanspruchbar sein.

Die Vorrichtung zur Temperaturüberwachung einer kryokonservierten biologischen Probe umfasst einen Probenbehälter mit einem Aufnahmeraum (Probenreservoir) zur Aufnahme einer Probe, insbesondere einer biologischen Probe. Die Vorrichtung umfasst ferner eine außen am Probenbehälter anordenbare und/oder angeordnete Indikatoreinrichtung zur Überwachung mindestens eines Temperaturgrenzwertes. Die Indikatoreinrichtung weist mindestens einen Hohlraum auf, der lediglich zum Teil mit einer Indikatorsubstanz gefüllt ist, deren Schmelztemperatur bei Normaldruck, also bei 1013,25 mbar, in einem Bereich von -20 °C bis -140 °C liegt. Die Schmelztemperatur kann auch in einem Bereich von -20 °C bis -100 °C liegen. Der mindestens eine Hohlraum ist mit dem Aufnahmeraum des Probenbehälters nicht fluidisch verbunden, so dass die Indikatorsubstanz nicht in direkten Kontakt mit einer im Aufnahmeraum befindlichen Probe treten kann. Der Begriff "anordenbar und/oder angeordnet" soll umfassen "befestigbar und/oder befestigt", "koppelbar und/oder gekoppelt", "verbindbar und/oder verbunden". Erfindungsgemäß weist die Vorrichtung außerdem die Merkmale der Variante i) oder der Variante ii) des Anspruchs 1 auf.

Durch die Indikatoreinrichtung der erfindungsgemäßen Vorrichtung wird mindestens ein Zusatzkompartiment bereitgestellt, das durch die partielle Füllung mit der Indikatorsubstanz als Indikatorelement verwendet werden kann, um eine unerwünschte Überschreitung der Grenztemperatur anzuzeigen.

Der Probenbehälter ist ein für eine Kryokonservierung geeigneter Behälter, beispielsweise ein Röhrchen, ein Straw (auch als Samenröhrchen bezeichnet), ein Beutel zur Blut- oder Stammzellenlagerung, eine Box oder ein anderer für eine Kryokonservierung geeigneter Behälter. Derartige Behälter werden entsprechend auch als Kryoröhrchen, Kryostraw, Kryobeutel, Kryobox oder allgemein als Kryobehälter bezeichnet.

Kryoröhrchen (engl. cryogenic tubes) werden auch als Biobank- oder Kryobankröhrchen bezeichnet. Kryoröhrchen weisen einen Aufnahmeraum auf, der einen inneren Hohlraum zur Aufnahme einer biologischen Probe ausbildet. Das Kryoröhrchen weist ferner üblicherweise einen Deckel zum Verschließen des Aufnahmeraums auf. Der Deckel kann einen Eingriff aufweisen, über den der Deckel mit einem Werkzeug gedreht werden kann. Das Kryoröhrchen kann auch ein Bodenelement aufweisen, das eine Kennung, z. B. in Form eines maschinenlesbaren Codes, aufweist.

Das Verfahren umfasst ferner das Einfrieren der Indikatorsubstanz(en), wobei der mindestens eine Hohlraum der Indikatoreinrichtung während des Einfrierens der Indikatorsubstanz(en) in eine erste Lage gebracht wird. In der ersten Lage fließt die Indikatorsubstanz im flüssigen Zustand in ein erstes Teilvolumen des Hohlraums der Indikatoreinrichtung und gefriert dort. Nach dem Einfrieren, insbesondere vor und während der Überwachungsphase der Kryolagerung, wird der mindestens eine Hohlraum mit der jeweils darin gefrorenen Indikatorsubstanz und bei einer Temperatur der Indikatorsubstanz(en) unterhalb der Schmelztemperatur in eine zweite Lage gebracht, in der ein Schmelzen der Indikatorsubstanz durch den Einfluss der Schwerkraft zu einer zumindest teilweisen Konfigurationsänderung der Indikatorsubstanz in dem jeweiligen Hohlraum führt.

Die Konfigurationsänderung kann eine zumindest teilweise Veränderung der Lage der Indikatorsubstanz und/oder der Form der Indikatorsubstanz, z. B. der Oberflächenform, sein. Schmilzt die Indikatorsubstanz in der zweiten Lage, wird sie unter dem Einfluss der Schwerkraft in ein zweites Teilvolumen fließen und, falls die Temperatur wieder unter den Schmelzpunkt fällt, dort wieder gefrieren.

Mit anderen Worten wird die Indikatorsubstanz in einer solchen Geometrie oder Lage eingefroren und der mindestens eine Hohlraum der Indikatoreinrichtung in seiner Lage im tiefgefrorenen Zustand, z. B. bei der Lagertemperatur oder zumindest unterhalb der festgelegten Grenztemperatur bzw. Schmelztemperatur der Indikatorsubstanz, verändert, so dass ein Schmelzen der Indikatorsubstanz nach der Lageveränderung zu einer sichtbaren Verlagerung der Flüssigkeit oder ihrer Begrenzungsgeometrie führt. An dieser Veränderung der Flüssigkeit, die z. B. gefärbt oder anderweitig gut erkennbar gemacht werden kann, kann sofort durch Anschauen oder auch technisch automatisiert festgestellt werden, ob die Grenztemperatur überschritten wurde.

Gemäß dem Verfahren besteht nun die Möglichkeit, die Vorrichtung, aufweisend den Probenbehälter mit einer darin befindlichen kryokonservierten Probe und die Indikatoreinrichtung, zur Kryokonservierung, zu lagern, wobei die Indikatoreinrichtung so am Probenbehälter angeordnet ist, dass der mindestens eine Hohlraum sich in der zweiten Lage befindet.

Zu einem späteren Zeitpunkt kann geprüft werden, ob eine Konfigurationsänderung der gefrorenen Indikatorsubstanz, z. B. eine zumindest teilweise Verlagerung und/oder eine Formänderung der Indikatorsubstanz, stattgefunden hat.

Ist dies der Fall, kann auf ein Überschreiten der Schmelztemperatur der Indikatorsubstanz und somit der zu überwachenden Grenztemperatur geschlossenen werden, insbesondere auch dann, wenn die Überschreitung nur kurzzeitig aufgetreten ist.

Ein besonderer Vorzug der Erfindung liegt somit darin, dass eine Konfigurationsänderung der Indikatorsubstanz direkt anzeigt, ob eine Kryoprobe sich über eine definierbare Grenztemperatur, und wenn auch nur kurzzeitig, erwärmt hat. Dies kann durch visuelle Sichtprüfung oder auch technisch automatisiert mittels einer entsprechend eingerichteten Messeinrichtung schnell und einfach festgestellt werden, ohne dass die Probe aus dem Probenbehälter entnommen oder aufgetaut werden muss.

Gemäß einer besonders bevorzugten Ausführungsform kann die Indikatoreinrichtung eine Mehrzahl von Hohlräumen aufweisen, die jeweils lediglich zum Teil mit einer Indikatorsubstanz, deren Schmelztemperatur in einem Bereich von -20 °C bis-140 °C liegt, gefüllt sind, wobei die Indikatorsubstanzen in den Hohlräumen sich ihren Schmelztemperaturen unterscheiden. Damit können unterschiedliche Temperaturgrenzwerte überwacht werden, wobei jede Indikatorsubstanz so ausgewählt und/oder deren Mischungsverhältnis so eingestellt ist, dass ihr Schmelzpunkt einem der zu überwachenden Temperaturgrenzwerte entspricht. Diese Ausführungsform bietet den Vorteil, dass sich die erreichten Temperaturintervalle, in die die Probe gelangt ist, genauer eingrenzen lassen.

Ferner kann die Indikatoreinrichtung oder zumindest der mindestens eine Hohlraum der Indikatoreinrichtung lösbar am Probenbehälter befestigbar und/oder befestigt sein, beispielsweise mittels mindestens einer Steckverbindung, Rastverbindung, Klemmverbindung, Schraubverbindung und/oder Klickverbindung. Dies bietet den Vorteil, dass die Indikatoreinrichtung räumlich getrennt vom Probenbehälter gelagert und vorbereitet (z. B. Gefrieren der Indikatorsubstanz in der ersten Lage) werden kann. Unter einer lösbaren Befestigung soll insbesondere auch ein Aufschieben, Aufkleben oder Aufstecken der Indikatoreinrichtung auf den Probenbehälter umfasst sein.

Ferner kann die Indikatoreinrichtung an mindestens einer Stelle transparent oder semi-transparent sein, so dass der mindestens eine Hohlraum bzw. eine Konfigurationsänderung einer im Hohlraum befindlichen Indikatorsubstanz von außen beobachtbar ist. Hierzu kann insbesondere eine Wandung des mindestens einen Hohlraums an mindestens einer Stelle transparent oder semi-transparent sein. Vorzugsweise ist die gesamte Wandung des mindestens einen Hohlraums transparent oder semi-transparent ausgeführt.

Zur besseren Erkennbarkeit kann die Indikatorsubstanz einen Indikatorzusatz enthalten, der eine Detektierbarkeit einer physikalischen Eigenschaft der Indikatorsubstanz erhöht. Der Indikatorzusatz kann beispielsweise ein Farbstoff sein, so dass die Indikatorsubstanz farbig oder gefärbt, d. h. nicht transparent, ist und so deren Form und/oder Lage besser optisch erkennbar ist.

Als Farbstoff kommt grundsätzlich jeder Farbstoff in Frage, welcher mindestens die folgenden Bedingungen erfüllt:
- intensives Färbevermögen auch in kleinen Mengen und Konzentrationen (z. B. ausgehend von einer gesättigten Farblösung Zugabe im Bereich < 1 Volumen-%, in der Regel im Promille- oder Subpromille-Bereich).
- frosttolerant
- lichtecht bei den Versand- als auch den relevanten tiefen Temperaturen
- löslich in allen Bestandteilen der Indikatorsubstanz
- kein Entmischen beim Einfrieren
- keine Reaktion mit Kunststoffmaterialien, welche in Kontakt mit der Indikatorsubstanz kommen.

Vorzugsweise ist der Farbstoff aus der Gruppe ausgewählt, welche Triphenylmethanfarbstoffe, Rhodaminfarbstoffe, insbesondere Xanthene, Azofarbstoffe sowie Phenazin-und Phenothiazinfarbstoffe umfasst.

In spezielleren Ausführungsformen ist der Farbstoff aus der Gruppe ausgewählt, welche Oil Red, Methylrot, Brillantgrün, Rhodamin B, Neutralrot, Methylenblau oder andere Farbstoffe, die zur Anfärbung von Zellen in der Zytologie verwendet werden, umfasst.

Der Indikatorzusatz können Partikel, insbesondere Nanopartikel sein, die eine Streuwirkung und/oder Polarisationswirkung der Indikatorsubstanz für auf die Indikatorsubstanz auftreffende elektromagnetische Strahlung erhöhen. Dadurch kann eine Konfigurationsänderung der Indikatorsubstanz mittels einer optischen Transmissionsmessung, Streumessung und/oder Polarisationsmessung zuverlässiger detektiert werden. Der Indikatorzusatz können leitfähige Partikel sein. Durch Beimischen von leitfähigen Partikel kann die Leitfähigkeit oder Impedanz der Indikatorsubstanz beeinflusst werden. Auf diese Weise kann eine Konfigurationsänderung der Indikatorsubstanz mittels einer Leitfähigkeitsmessung oder Impendanzmessung detektiert werden.

Gemäß einer bevorzugten Ausführungsform kann die Vorrichtung eine Messeinrichtung aufweisen, die ausgebildet ist, eine Lage der Indikatorsubstanz(en) in dem mindestens einen Hohlraum zu erfassen. Die Messeinrichtung kann eine optische oder optischelektrische Messeinrichtung sein, um z. B. mit einer optischen Transmissions-, Streulichtoder Reflektionsmessung eine Konfigurationsänderung der Indikatorsubstanz festzustellen.

Als Indikatorsubstanz kann eine Substanz ausgewählt werden, deren Schmelztemperatur einer vorbestimmten Grenztemperatur, deren Überschreiten überwacht werden soll, entspricht. Die Indikatorsubstanz ist eine Flüssigkeit oder eine Mischung verschiedener Flüssigkeiten, deren Schmelzpunkt der gewünschten Grenztemperatur entspricht. Lediglich beispielhaft kann als Indikatorsubstanz eine Mischung aus Wasser (H₂O) und Ethanol (C₂H₆O), eine Mischung aus Wasser (H₂O) und Kaliumhydroxid (KOH) oder eine Mischung aus Wasser und einem Gefrierschutzmittel gewählt werden. Das Mischungsverhältnis wird dabei gemäß dem jeweiligen Schmelzdiagramm, das den Verlauf des Schmelzpunktes in Abhängigkeit vom Mischungsverhältnis angibt, so eingestellt, dass der Schmelzpunkt des Flüssigkeitsgemisches den gewünschten Wert, nämlich die zu überwachende Grenztemperatur, aufweist.

In einer bevorzugten Ausführungsform umfasst die Indikatorsubstanz mindestens einen Alkohol, welcher aus der Gruppe, die Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst, ausgewählt ist. Besonders bevorzugt ist der mindestens eine Alkohol aus Propan-1,3-diol, Propan-1,2-diol und Butan-2-ol ausgewählt.

In einer anderen bevorzugten Ausführungsform umfasst die Indikatorsubstanz mindestens zwei verschiedene Alkoholkomponenten:
a) einen Alkohol, ausgewählt aus der Gruppe, die Octan-1-ol, Nonan-l-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst;
b) einen Alkohol, ausgewählt aus der Gruppe, die Octan-1-ol, Nonan-l-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst, mit einem niedrigeren Schmelzpunkt als der Alkohol der Komponente a);
wobei das Mischungsverhältnis der Komponenten a) und b) so eingestellt ist, dass die Schmelztemperatur der Mischung innerhalb eines Temperaturbereichs von -20 °C bis -160 °C, insbesondere von -25 °C bis -160 °C oder -50 °C bis -150 °C, liegt.

Speziellere Ausführungsformen sind dadurch gekennzeichnet, dass die Indikatorsubstanz eine der folgenden Kombinationen der Komponenten a) und b) umfasst:
- Octan-1-ol und Butan-2-ol in einem Mischungsverhältnis von 5 bis 95 Vol.-%;
- Octan-1-ol und Pentan-1-ol in einem Mischungsverhältnis von 5 bis 95 Vol.-%;
- Octan-1-ol und Propan-1,2-diol in einem Mischungsverhältnis von 5 bis 95 Vol.-%;
- Nonan-1-ol und Butan-2-ol in einem Mischungsverhältnis von 5 bis 95 Vol.-%;
- Nonan-1-ol und Propan-1,2-diol in einem Mischungsverhältnis von 5 bis 95 Vol.-%;
- Nonan-1-ol und Pentan-1-ol in einem Mischungsverhältnis von 5 bis 95 Vol.-%;
- Propan-1,2-diol und Butan-2-ol in einem Mischungsverhältnis von 5 bis 95 Vol.-%;
- Propan-1,2-diol und Propan-1,3-diol in einem Mischungsverhältnis von 5 bis 95 Vol.-%;
- Propan-1,2-diol und Butan-1,2-diol in einem Mischungsverhältnis von 5 bis 95 Vol.-%;
- Propan-1,3-diol und Butan-2-ol in einem Mischungsverhältnis von 5 bis 95 Vol.-%;
- Propan-1,3-diol und Butan-1,2-diol in einem Mischungsverhältnis von 5 bis 95 Vol.-%;
- Pentan-1,5-diol und Butan-2-ol in einem Mischungsverhältnis von 5 bis 95 Vol.-%;
- Benzylalkohol und Butan-2-ol in einem Mischungsverhältnis von 5 bis 95 Vol.-%;
- Pentan-1-ol und Butan-2-ol in einem Mischungsverhältnis von 5 bis 95 Vol.-%;
- Pentan-1-ol und Methanol in einem Mischungsverhältnis von 5 bis 95 Vol.-%;
- Cyclopentanol und Butan-2-ol in einem Mischungsverhältnis von 5 bis 95 Vol.-%;
- Cyclopentanol und Propan-1,2-diol in einem Mischungsverhältnis von 5 bis 95 Vol.-%;
- Cyclopentanol und Pentan-1-ol in einem Mischungsverhältnis von 5 bis 95 Vol.-%;
- Cyclopentanol und Butan-1,2-diol in einem Mischungsverhältnis von 5 bis 95 Vol.-%; wobei der angegebene Wert des Mischungsverhältnisses sich jeweils auf den Anteil der erstgenannten Komponente in der Mischung aus beiden Komponenten bezieht.

In besonders bevorzugten Ausführungsformen umfasst diese Indikatormischung beispielsweise Propan-1,2-diol und Butan-2-ol in einem Mischungsverhältnis von 40 bis 60 Vol.-% (ergibt eine Schmelztemperatur von ca. - 90 °C), Propan-1,2-diol und Propan-1,3-diol in einem Mischungsverhältnis von 30 bis 70 Vol.-%, oder Propan-1,3-diol und Butan-2-ol in einem Mischungsverhältnis von 30 bis 70 Vol.-%.

Vorzugsweise umfasst die Indikatorsubstanz neben dem mindestens einen Alkohol noch mindestens einen Farbstoff wie oben beschrieben. Besonders bevorzugt ist dieser Farbstoff aus der Gruppe ausgewählt, welche Oil Red, Methylrot, Brillantgrün und Rhodamin B umfasst.

Eine noch speziellere Ausführungsform ist dadurch gekennzeichnet, dass die Indikatorsubstanz zwei Alkohole a) und b), die aus Propan-1,3-diol, Propan-1,2-diol und Butan-2-ol ausgewählt sind, vorzugsweise in einem Mischungsverhältnis wie oben angegeben, sowie einen Farbstoff, der aus Gruppe ausgewählt ist, welche aus Oil Red, Methylrot, Brillantgrün und Rhodamin B besteht, umfasst.

Die Konzentration des Farbstoffs in der Alkoholkomponente kann je nach Farbstoff und Alkohol stark variieren.

In der Regel soll die Konzentration bei intensiver Färbung so niedrig wie möglich gehalten werden, damit die Farbmoleküle das Gefrier- und Schmelzverhalten der Alkohole, in denen sie gelöst werden, nicht verändern oder deren Viskosität erhöhen. Die Farbstoffkonzentration liegt dabei typischerweise in einem Bereich von < 10 Volumen-%, insbesondere < 1 % oder < 0,1 %, also im Prozent- oder Promille- bzw. Subpromillebereich.

In einer Variante der vorliegenden Erfindung entspricht die zu überwachende Grenztemperatur nicht direkt der Schmelztemperatur der Indikatorsubstanz, sondern vielmehr derjenigen Temperatur oberhalb der Schmelztemperatur, bei der die Viskosität der geschmolzenen Substanz soweit abgenommen hat, dass der erforderliche Flüssigkeitstransport stattfinden kann.

Diese Temperatur wird hier auch als Schwellentemperatur bezeichnet und liegt typischerweise in einem Temperaturbereich von 3-30 °C oder 5-30°C, beispielsweise 3-10 °C, 3-20 °C, 5-10 °C oder 5-20 °C, oberhalb der nominellen Schmelztemperatur.
In einer vorteilhaften Ausführungsform ist die Indikatorsubstanz daher dadurch gekennzeichnet, dass die flüssige Mischung in einem Temperaturbereich von 3-30 °C oder 5-30 °C oberhalb der Schmelztemperatur eine Viskosität in einem Bereich von 10 bis 10⁶ mPa*s, vorzugsweise 10 bis 10⁴ mPa*s, aufweist.

Vorstehend wurde bereits erwähnt, dass der Probenbehälter ein Kryoröhrchen sein kann. Gemäß dieser Variante kann die Indikatoreinrichtung beispielsweise als ein zylinderförmiger Körper ausgeführt sein, der als Bodenteil am Kryoröhrchen befestigbar ist. Dies bietet den Vorteil, dass die Indikatoreinrichtung zusätzlich die Funktion eines an sich bekannten Bodenteils eines Kryoröhrchen übernimmt, das eine vertikale Standfestigkeit des Kryoröhrchen gewährleistet. Ein weiterer Vorteil ist, dass die Indikatoreinrichtung, wenn diese ein herkömmliches Bodenteil ersetzt, keinen zusätzlichen Bauraum beansprucht.

Hierbei ist besonders vorteilhaft, wenn der zylinderförmige Körper den gleichen Außendurchmesser wie das Kryoröhrchen aufweist, so dass die Vorrichtung in herkömmlichen Lageraufnahmen einer Kryolagereinrichtung für Kryoröhrchen gelagert werden kann. Der zylinderförmige Körper kann transparent oder semi-transparent ausgeführt sein, d. h. aus einem transparenten oder semi-transparenten Material gefertigt sein.

Gemäß einer weiteren Ausführungsform, die nicht Teil der vorliegenden Erfindung ist, kann die Indikatoreinrichtung als ein allseitig geschlossener Hohlzylinder ausgeführt sein, der an der Unterseite des Probenbehälters, z. B. in Form eines Kryoröhrchens, vorgesehen ist und der insbesondere an der Unterseite des Probenbehälters lösbar befestigbar ist. Der Innenraum des Hohlzylinders bildet mindestens einen Hohlraum aus.

Der Innenraum kann als lediglich ein Hohlraum, der partiell mit der Indikatorsubstanz gefüllt ist, ausgeführt sein. Der Innenraum kann alternativ auch in mehrere voneinander fluidisch getrennte Teilhohlräume unterteilt sein, die jeweils partiell mit einer Indikatorsubstanz gefüllt sind. Vorzugsweise unterscheiden sich die Indikatorsubstanzen der Teilhohlräume zumindest in ihrer Schmelztemperatur, so dass durch jeden Teilhohlraum das Überschreiten eines unterschiedlichen Temperaturgrenzwertes überwacht werden kann.

Gemäß Variante i) der Erfindung ist die Indikatoreinrichtung als Bodenteil am Probenbehälter, z. B. als Bodenteil eines Kryoröhrchens, befestigt und weist an ihrer Unterseite mindestens eine Einstecköffnung auf, in der ein Behälter, insbesondere ein stiftförmiger Behälter, der lediglich zum Teil mit der Indikatorsubstanz gefüllt ist, lösbar gehaltert ist. Dies bietet den Vorzug, dass die Indikatoreinrichtung schnell und flexibel mit mindestens einem, die Indikatorsubstanz enthaltenden Behälter bestückt werden kann. Der Behälter kann beispielsweise in die Einstecköffnung eingesteckt und in der eingesteckten Stellung arretiert sein.

Weist der Probenbehälter eine zylinderförmige äußere Mantelfläche auf, z. B. im Falle eines Kryoröhrchens, sieht gemäß Variante ii) eine weitere vorteilhafte Möglichkeit der erfindungsgemäßen Realisierung vor, dass die Indikatoreinrichtung als ein Hohlzylinder ausgeführt ist, der zur Befestigung am Probenbehälter auf eine äußere Mantelfläche des Probenbehälters aufschiebbar ist und/oder aufgeschoben ist. Der Hohlzylinder ist doppelwandig mit einer Innenwandung und einer Außenwandung ausgeführt. Ein Zwischenraum zwischen der Innenwandung und der Außenwandung, die den mindestens einen Hohlraum ausbildet, ist zum Teil mit der Indikatorsubstanz gefüllt.

Ein Vorteil dieses Ausführungsbeispiels liegt darin, dass ein herkömmlicher Probenbehälter verwendet werden kann, ohne dass Modifikationen zur Anordnung der Indikatoreinrichtung vonnöten sind.

Der Hohlraum des Hohlzylinders kann wiederum entweder als lediglich ein Hohlraum, der partiell mit der Indikatorsubstanz gefüllt ist, ausgeführt sein oder in mehrere voneinander fluidisch getrennte Teilhohlräume unterteilt sein, die jeweils partiell mit einer Indikatorsubstanz gefüllt sind.

Gemäß einer Variante dieses Ausführungsbeispiels können der Hohlzylinder aus einem ersten Kunststoffmaterial und der Probenbehälter aus einem zweiten Kunststoffmaterial hergestellt sein. Hierbei weist das erste Kunststoffmaterial bei einer Temperaturverringerung, zumindest in einem Temperaturbereich unterhalb der Schmelztemperatur der Indikatorsubstanz, eine größere thermische Kontraktion als das zweite Kunststoffmaterial auf.

Mit anderen Worten können die Ausdehnungskoeffizienten der Plastikmaterialien des Probenbehälters und des Hohlzylinders unterschiedlich gewählt werden, und zwar so, dass ein Aufbringen des Hohlzylinders leicht unterhalb der Schmelztemperatur der Indikatorsubstanz oder leicht unterhalb der niedrigsten Schmelztemperatur bei Verwendung mehrerer unterschiedlicher Indikatorsubstanzen erfolgt und dass der Hohlzylinder bei der Lagertemperatur mit dem Probenbehälter verkeilt und damit schwerer abzulösen ist. Erwärmt nun jemand die Probe unerlaubt, müsste er sofort den Zylinder austauschen, was dadurch vermieden werden kann, dass diese Zylinder nicht frei an den Kryotanks verfügbar sind. Somit kann ein unberechtigtes Austauschen der Indikatoreinrichtung vermieden oder zumindest erschwert werden.

Gemäß einer weiteren bevorzugten Ausführungsform, die nicht Teil der vorliegenden Erfindung ist, weist die Indikatoreinrichtung mindestens einen Hohlkörper, insbesondere einen länglichen Hohlkörper, auf, der lediglich zum Teil mit der Indikatorsubstanz gefüllt ist und an einer seitlichen Außenwand des Probenbehälters befestigt ist.

Hierbei besteht einerseits die Möglichkeit, dass der Hohlkörper mittels einer Steck-, Klick-oder Rastverbindung am Probenbehälter befestigt ist. Dies ermöglicht ein schnelles Anbringen des Hohlkörpers mit der Indikatorsubstanz am Probenbehälter. Ferner kann der Hohlkörper drehbar am Probenbehälter befestigt sein. Dadurch kann der Hohlkörper in einem am Probenbehälter befestigten Zustand sowohl in die erste als auch in die zweite Lage gebracht werden.

Ferner besteht anderseits die Möglichkeit, dass an einer seitlichen Außenwand des Probenbehälters eine Aufnahme vorgesehen ist, beispielsweise in Form einer Hülse oder Einstecktasche, in die der Hohlkörper zur Halterung am Probenbehälter einsteckbar und/oder eingesteckt ist.

Mit dem Begriff Probenbehälter wird insbesondere ein für eine Kryokonservierung ausgelegter Behälter bezeichnet. Der Probenbehälter ist vorzugsweise unter Verwendung tieftemperaturverträglichen Kunststoffmaterials für Temperaturen unter -140 °C hergestellt. Das Kunststoffmaterial kann ohne Veränderung und ohne Schaden wiederholte Temperaturwechsel tolerieren. Es wird vorzugsweise ein Kunststoffmaterial verwendet, dessen Wasseraufnahmefähigkeit < 1 % der Eigenmasse, insbesondere < 0.1 % der Eigenmasse beträgt. Erfindungsgemäße Kryospeicherelemente basieren beispielsweise auf Polyurethan oder Polyethylen.

Mit dem Begriff "biologische Probe" wird biologisches Material wie Zellen, Gewebe, Zellbestandteile, biologische Makromoleküle etc. bezeichnet, welches im Probenbehälter der Kryokonservierung unterzogen wird - ggf. in einer Suspension und/oder im Verbund mit einem Substratmaterial. Im Aufnahmeraum kann somit ein Substrat angeordnet sein, das zur adhärenten Aufnahme biologischer Zellen, die Teil der biologischen Probe sind, eingerichtet ist.

Die zuvor beschriebenen bevorzugten Ausführungsformen und Merkmale sind miteinander kombinierbar. Weitere Einzelheiten und Vorteile der Erfindung werden im Folgenden unter Bezug auf die beigefügten Zeichnungen beschrieben. Es zeigen:
- FIG. 1-6: schematische Ansichten verschiedener Ausführungsbeispiele eine Vorrichtung zur Temperaturüberwachung einer kryokonservierten biologischen Probe, wobei die in den Figuren 1A-C, 5A-D und 6A-B gezeigten Ausführungsbeispiele nicht unter die vorliegende Erfindung fallen;
- FIG. 7: ein Ablaufdiagramm zur Illustration eines Ausführungsbeispiels eines Verfahrens zur Temperaturüberwachung einer kryokonservierten biologischen Probe;
- FIG. 8A, 8B, 9A: jeweils ein Schmelzdiagramm eines Flüssigkeitsgemisches;
- FIG. 9B: eine Tabelle mit Schmelzpunkten einiger reiner Flüssigkeiten; und
- FIG. 10: eine Mischbarkeitsmatrix von Lösemitteln.

Gleiche oder funktional äquivalente Elemente sind in allen Figuren mit denselben Bezugszeichen bezeichnet und werden zum Teil nicht gesondert beschrieben.

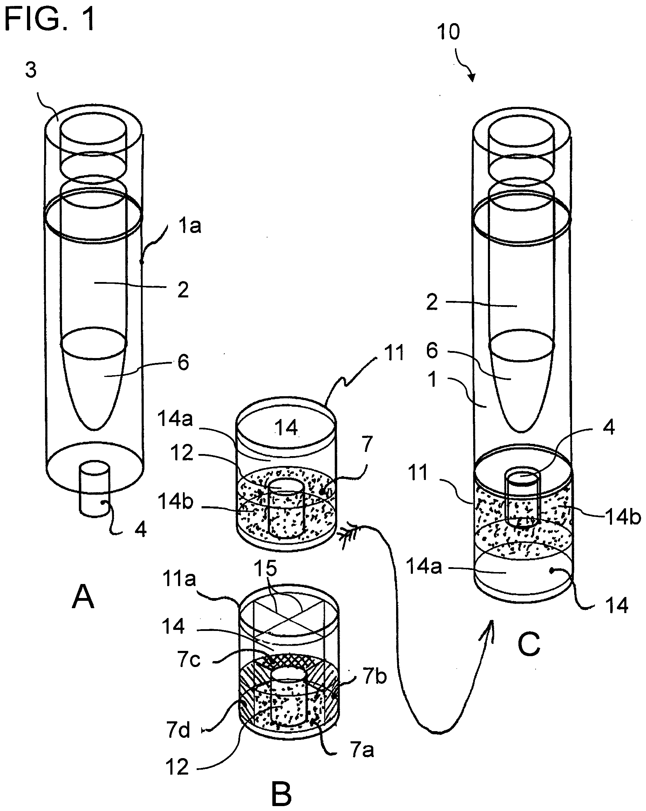

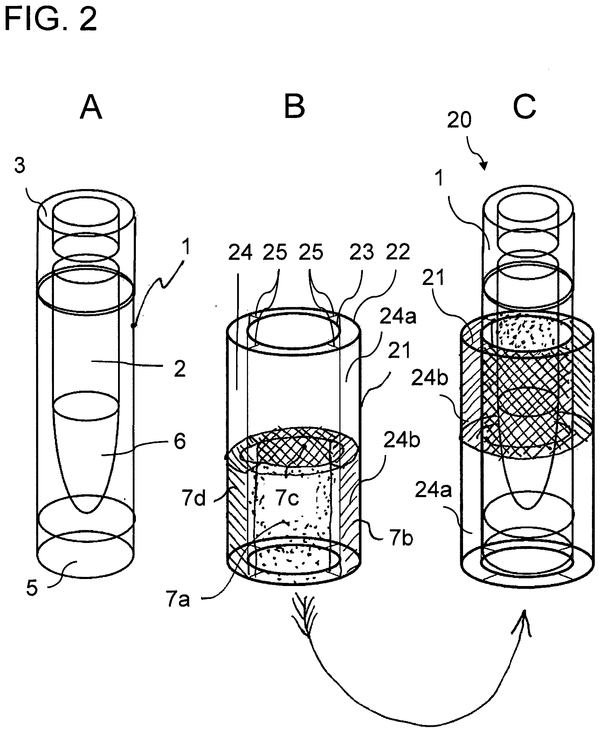

Figur 1A zeigt einen Probenbehälter in Form eines Kryoröhrchens (Tube) 1a. Es umfasst ein Aufnahmevolumen 2 für die Bioprobe, in dem sich die Biomaterialien befinden. Die Bioprobe kann beispielsweise eine Zellsuspension 6 sein. Das Kryoröhrchen 1a umfasst ferner einen Deckel 3, der das Gefäß verschließt. Der Deckel kann an seiner Oberseite einen Eingriff 4 besitzen, über den der Deckel 3 mit einem Werkzeug (jeweils nicht gezeigt) im Fall der Automatisierung gedreht werden kann. An sich bekannte Kryoröhrchen, wie beispielsweise das in Figur 2 gezeigte, können auch einen Boden 5 enthalten, in den optional ein Barcodeviereck oder eine andere Kennung eingefügt ist. Eine Besonderheit des in Figur 1 gezeigten Ausführungsbeispiels liegt darin, dass das Bodenelement des Kryoröhrchens 1a gleichzeitig als Indikatoreinrichtung 11 dient.

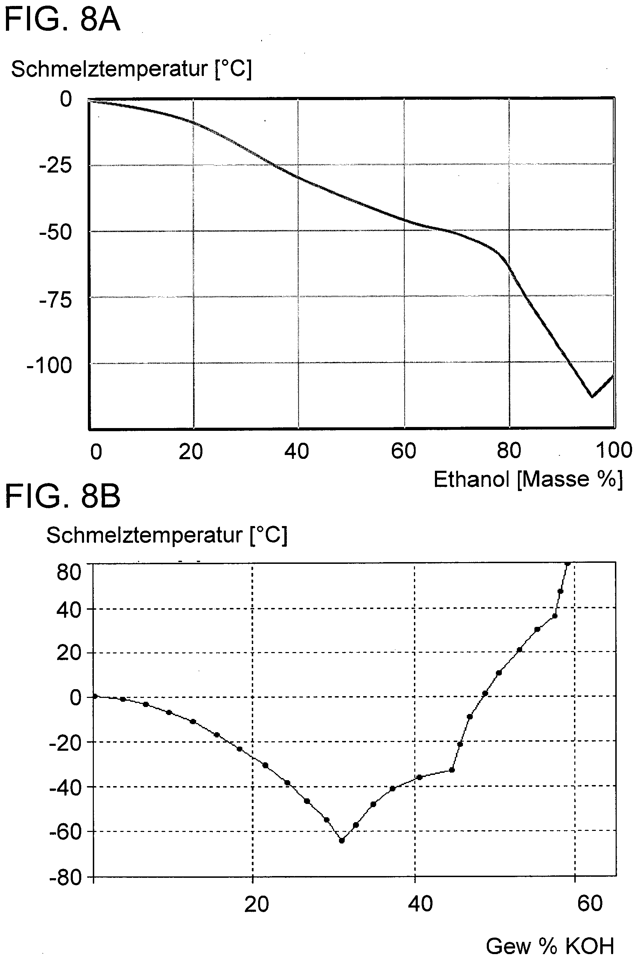

Das zylinderförmige Bodenteil bzw. die Indikatoreinrichtung 11 weist einen abgeschlossenen Hohlraum 14 auf, der partiell mit einer Indikatorsubstanz 7 in Form einer Flüssigkeit oder einer Flüssigkeitsmischung befüllt ist, deren Gefrierpunkt/Schmelzpunkt im Bereich von -20 °C bis -100 °C über das Mischungsverhältnis gewählt ist. Dies wird nachfolgend noch anhand der Figuren 8 bis 10 näher erläutert.

Das Bodenteil 11 wird in einer ersten Lage, hier auf dem Kopf stehend, auf die Lagertemperatur, die unterhalb der Schmelztemperatur der Indikatorsubstanz 7 liegt, gebracht und erst an dem Kryoröhrchen 1a befestigt, wenn auch dieses die Lagertemperatur erreicht hat. Die erste Lage ist in Figur 1B dargestellt. Die Indikatorsubstanz nimmt ein erstes Teilvolumen 14b innerhalb des Hohlraums 14 ein.

Das Bodenteil wird in einer zweiten Lage am Kryoröhrchen befestigt. Hierzu wird das Bodenteil 11 um 180° ausgehend von der ersten Lage gedreht, so dass sich die gefrorene Indikatorsubstanz 7 nunmehr oberhalb des freien Volumens 14a befindet, wie in Figur 1C dargestellt. Die Befestigung des Bodenteils 11 am Kryoröhrchens erfolgt über einen Zapfen 4, der an der Unterseite des Kryoröhrchens 1a abragt und in Eingriff mit einer formkorrespondieren Aufnahme 12 der Indikatoreinrichtung 11 gebracht wird. Selbstverständlich können alternativ andere zweckmäßig ausgeführte Befestigungsmöglichkeiten vorgesehen sein, wie Gewinde, Rast- oder Klemmverbindungen etc., um die Indikatoreinrichtung 11 als Bodenteil am Kryoröhrchen 1a zu befestigen.

In der in Figur 1C gezeigten Anordnung, zumeist senkrecht in Aufnahmen stehend, wird die Vorrichtung 10, umfassend das Kryoröhrchen und die daran befestige Indikatoreinrichtung 11, in einem Tieftemperaturbehälter, z. B. einem Kryotank, gelagert.

Im Falle einer Überschreitung der Schmelztemperatur der Indikatorsubstanz 7 fließt diese auf den Boden des Volumens 14 im Teilbereich 14a, was leicht erkennbar oder detektierbar ist. Ist die Probe 6 stets unter dem Gefrierpunkt der Indikatorsubstanz 7 gehalten worden, ergibt sich stattdessen der Zustand wie in Figur 1C gezeigt. Auf diese Weise ist leicht eine unstatthafte Erwärmung der Probe 6 erkennbar. Die Vorrichtung 10, insbesondere die Indikatoreinrichtung 11, ermöglicht auf diese Weise die Überwachung, ob ein Temperaturgrenzwert (Schmelztemperatur) bei der Kryolagerung überschritten wurde.

Eine weitere Ausführungsvariante der Indikatoreinrichtung bzw. des Bodenteils 11a ist im unteren Teil von Figur 1B dargestellt. Wie erkennbar ist, kann das Volumen 14 des Bodenteils 11a auch in zueinander abgeschlossene Teilbereiche unterteilt werden, hier abgetrennt durch die Trennwände 15. Jeder der Teilbereiche ist wiederum mit einer Indikatorsubstanz 7a, 7b, 7c, 7d teilgefüllt, wobei die Indikatorsubstanzen 7a, 7b, 7c, 7d verschiedene Schmelzpunkte aufweisen, z. B. -50 °C, -60 °C, -70 °C und -100 °C.

Die Anbringung am Kryoröhrchen 1a erfolgt wie bereits für die Indikatoreinrichtung 11 beschrieben. Je nachdem, welche Indikatorsubstanz oder Indikatorsubstanzen 7a, 7b, 7c, 7d sich später am Boden des Hohlraums 14 befinden, zeigt dies an, welche Temperaturen überschritten wurden. Befinden sich alle Indikatorsubstanzen 7a, 7b, 7c, 7d im oberen Bereich des Volumens 14, ist die Probe unverändert und korrekt gelagert worden.

Die Bodenteile 11, 11a sind aus einem transparenten Material gefertigt, so dass die Lage der Indikatorsubstanz(en) im Volumen 14 von außen einfach beobachtbar ist. Die Lage der Indikatorsubstanz 7 bzw. der Indikatorsubstanzen 7a, 7b, 7c, 7d innerhalb des Bodenteils 11 bzw. des Bodenteils 11a ist optisch durch Ansehen, aber auch mittels einer zweckmäßig ausgebildeten Messeinrichtung optoelektrisch und automatisiert detektierbar. Ist die Indikatorsubstanz gefärbt, erleichtert dies die Lagebestimmung. Ein weiterer Vorteil der Vorrichtung 10 ist die Wiederverwendbarkeit der Bodenteile 11, 11a und die Verwendung von als Indikatorsubstanz 7 verwendeten Markerflüssigkeiten mit einem frei wählbaren Gefrierpunkt. Für Lebendablagen empfiehlt sich eine Schmelztemperatur um -80 °C, da hier eine deutliche Rekristallisation des Eises in den Zellen und um diese herum auftritt, die zu einer Qualitätsminderung der Kryoprobe führt. Für biologische Flüssigkeiten und Lagerung von genetischem Material, das bei -80 °C gelagert wird, ist ein Schmelzpunkt um -30 °C zu empfehlen.

Figur 2 zeigt ein Ausführungsbeispiel einer Vorrichtung 20, die ein Kryoröhrchen 1 und eine Indikatoreinrichtung 21 aufweist. Die Indikatoreinrichtung 21 ist als Hohlzylinder ausgeführt, der von unten (oder oben) auf ein Kryoröhrchen 1 im tiefkalten Zustand aufgeschoben werden kann. Hierbei kann ein in an sich bekannter Weise ausgeführtes Kryoröhrchen 1, das beispielhaft in Figur 2A gezeigt ist, verwendet werden. Hierbei unterscheidet sich das in Figur 2A gezeigte Kryoröhrchen von dem in Figur 1A gezeigten lediglich dadurch, dass ein herkömmliches Bodenteil 5 verwendet wird, das nicht mit Indikatorsubstanz teilgefüllt ist.

Der Hohlzylinder ist doppelwandig mit einer Innenwandung 23 und einer Außenwandung 22 ausgeführt, wobei ein Zwischenraum 24 zwischen der Innenwandung 23 und der Außenwandung 22 zum Teil mit der Indikatorsubstanz gefüllt ist.

Figur 2B zeigt als beispielhafte Ausführungsvariante des Zylinders 22 ein Vierkammersystem mit vier verschiedenen Indikatorsubstanzen 7a, 7b, 7c, 7d. Der Zwischenraum 24 ist hierbei durch Trennwände 25 in vier Teilhohlräume unterteilt, die jeweils mit einer Indikatorsubstanz teilgefüllt sind. Die verschiedenen Indikatorsubstanzen 7a, 7b, 7c, 7d sind hierbei so ausgewählt, dass ihre Schmelzpunkte verschieden sind und jeweils einem zu überwachenden Temperaturgrenzwert entsprechen.

Die Indikatoreinrichtung 21 wird in der in Figur 2B gezeigten ersten Lage auf die Lagertemperatur abgekühlt, wobei die Indikatorflüssigkeiten 7a, 7b, 7c, 7d jeweils im unteren Teilvolumen 24b des Zwischenraums 24 festfrieren.

Die Indikatoreinrichtung 21 wird nach dem Abkühlen auf die Lagertemperatur um 180° gedreht (zweite Lage) auf das Kryoröhrchen 1 aufgeschoben, was in Figur 2C dargestellt ist.

Ist nach der Lagerung oder auch während der Lagerung die in Figur 2C gezeigte Verteilung der Indikatorsubstanzen 7a, 7b, 7c, 7d, d. h., alle Indikatorsubstanzen 7a, 7b, 7c, 7d befinden sich im oberen Teil 24b des Zwischenraums 24 des Zylinders 21, festzustellen, ist keine der Schmelztemperaturen der Indikatorsubstanzen 7a, 7b, 7c, 7d erreicht worden. Befindet sich eine Indikatorsubstanz dagegen in dem Teilbereich 24a, wurde zwischenzeitlich ihr Schmelzpunkt überschritten.

Zur Vermeidung eines unberechtigten Austausches können die Ausdehnungskoeffizienten der Plastikmaterialien des Kryoröhrchens 1 und des Zylinders 21 unterschiedlich gewählt werden, und zwar so, dass ein Aufbringen des Zylinders 21 leicht unterhalb der niedrigsten Schmelztemperatur der Indikatorsubstanzen 7a, 7b, 7c, 7d erfolgt und dass bei der Lagertemperatur der Zylinder 21 mit der Außenwandung des Kryoröhrchens 1 verkeilt und damit schwerer abzulösen ist. Erwärmt nun jemand die Probe unerlaubt, müsste er sofort den Zylinder 21 austauschen, was dadurch vermieden werden kann, dass diese Zylinder 21 nicht frei an den Kryotanks verfügbar sind.

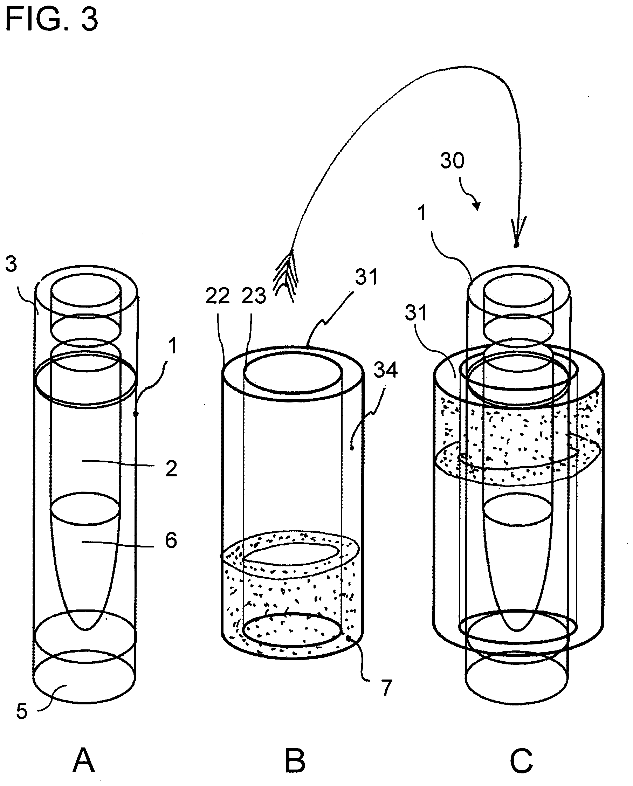

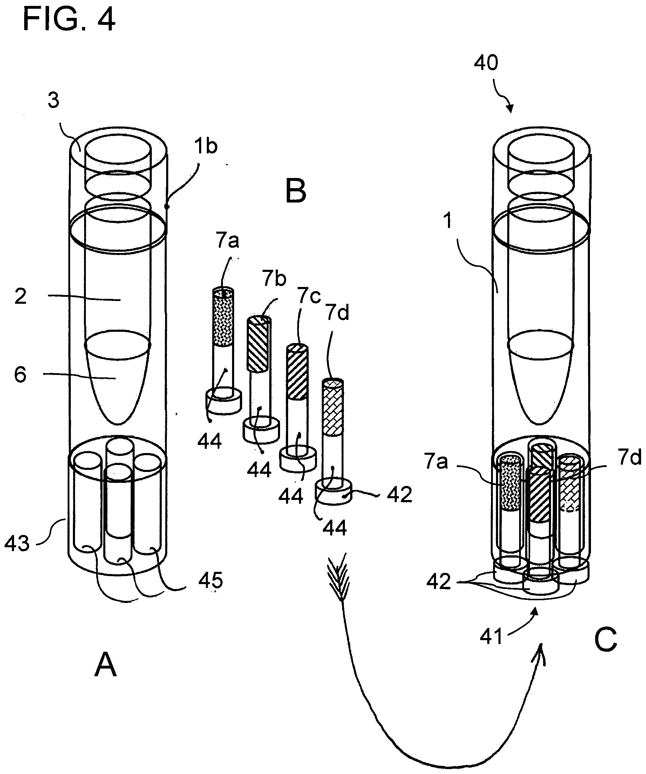

Figur 3 zeigt eine weitere Vorrichtung 30 zur Temperaturüberwachung einer kryokonservierten biologischen Probe. Die Vorrichtung 30 weist analog zu Figur 2 einen hohlwandigen Zylinder 31 auf, der von unten oder oben auf ein Kryoröhrchen 1 aufgebracht werden kann. Der Unterschied zu der in Figur 2 gezeigten Variante liegt darin, dass der Zylinder 31 nur mit einer Indikatorsubstanz 7 partiell gefüllt ist. Der Zwischenraum 34 zwischen Außenwandung 22 und Innenwandung 23 des doppelwandigen Zylindermantels ist somit nicht wie in Figur 2 in fluidisch voneinander getrennte Teilräume unterteilt. Auch hier erfolgt das Einfrieren und Aufstecken in um 180° gedrehter Position, wie in Figur 3B und Figur 3C gezeigt. Sowohl der Zylinder 31 als auch die darin enthaltene Indikatorsubstanzmenge 7 können weitaus kürzer als auch geringer im Volumen ausgeführt werden als hier gezeigt ist, typischerweise 1/3 bis 1/5 der gezeigten Länge. Figur 4 zeigt eine weitere Vorrichtung 40 zur Temperaturüberwachung einer kryokonservierten biologischen Probe, umfassend eine Indikatoreinrichtung 41.

Der Probenbehälter ist wiederum als Kryoröhrchen 1b ausgeführt. Am Kryoröhrchen 1b ist ein Bodenteil 43 befestigt, das vier Aufnahmezylinderöffnungen 45 aufweist, in die mit einer Indikatorsubstanz 7a, 7b, 7c, oder 7d partiell befüllte Stifte 42 mit einem zylindrischen Innenvolumen 44 eingefügt werden können. Das Einfrieren und Einfügen erfolgt analog zu den in Figur 2 und 3 gezeigten Ausführungsbeispielen, d. h. in jeweils um 180° zueinander gedrehten Lagen, und ergibt bei korrekter Lagerung das in Figur 4C gezeigte Bild. Sowohl die Aufnahmezylinder 45 als auch die Stifte 42 sind so ausgeführt, dass sie beim Einfügen arretiert werden.

Im Falle einer Überschreitung der jeweiligen Schmelztemperatur einer der Indikatorsubstanzen 7a, 7b, 7c, 7d fließt diese auf den Boden des Volumens 44, was leicht erkennbar oder detektierbar ist. Ist die Probe 6 stets unter den Schmelzpunkten der Indikatorsubstanzen 7a, 7b, 7c, 7d gehalten worden, ergibt sich stattdessen der Zustand wie in Figur 4C gezeigt. Auf diese Weise ist leicht eine unstatthafte Erwärmung der Probe 6 erkennbar.

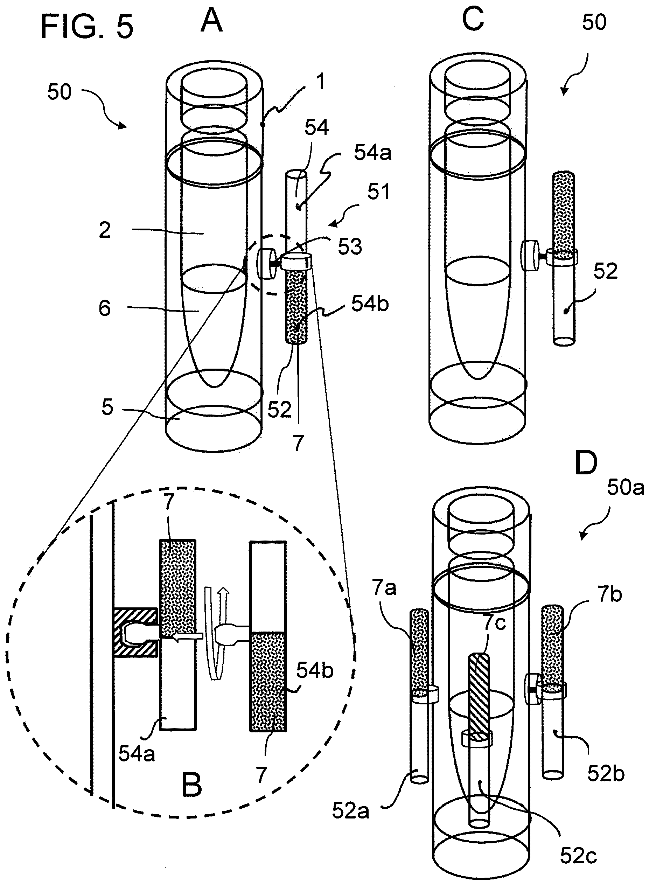

Figur 5 zeigt zwei weitere Vorrichtungen 50 und 50a zur Temperaturüberwachung einer kryokonservierten biologischen Probe.

Die Figur 5A zeigt ein Ausführungsbeispiel eines Kryoröhrchens 1, an dessen Seite eine Indikatoreinrichtung 51 drehbar befestigt ist. Die Indikatoreinrichtung 51 weist einen Hohlzylinder 52 auf, dessen Hohlraum 54 partiell mit einer Indikatorsubstanz 7 gefüllt ist. Der Hohlzylinder 52 ist über eine Achse 53 drehbar am Kryoröhrchen 1 befestigt. Der Durchmesser des Hohlzylinders 52 ist kleiner als der der Kryoröhrchens 1.

Um die Vorrichtung 50 zur Temperaturüberwachung einer kryokonservierten biologischen Probe verwenden zu können, werden nun das Kryoröhrchen 1 und die Indikatoreinrichtung 51 in der in Figur 5A gezeigten Position (erste Lage) auf die Lagertemperatur gebracht. Die Indikatorsubstanz gefriert dabei im unteren Teilvolumen 54b des Hohlzylinders 52.

Die nunmehr vollständig gefrorene Indikatoreinrichtung 51 wird um 180° gedreht, wie in der vergrößerten Darstellung der Figur 5B illustriert ist, so dass die gefrorene Indikatorsubstanz 7 sich oben und der flüssigkeitsfreie Teil 54a unten befindet (zweite Lage).

In der in Figur 5C gezeigten zweiten Lage führt ein Schmelzen der Indikatorsubstanz durch den Einfluss der Schwerkraft dazu, dass die flüssig gewordene Indikatorsubstanz nach unten in den Teilbereich 54a fließt. An diesem Zustand kann somit analog wie in den Beispielen der vorherigen Figuren erkannt werden, ob eine unerwünschte, wenn auch nur zeitweise Erwärmung der Kryoprobe 6 stattgefunden hat.

Der partiell mit Indikatorsubstanz 7 gefüllte Hohlzylinder 52 kann entweder drehbar fest am Kryoröhrchen 1 befestigt sein oder mittels wenigstens einer Steckverbindung, Rastverbindung, Klemmverbindung, Schraubverbindung und/oder Klickverbindung drehbar und lösbar am Kryoröhrchen 1 befestigbar sein. In Figur 5B ist beispielhaft eine einklickbare Variante gezeigt.

Figur 5D zeigt eine weitere Variante 50a, die sich von der Vorrichtung 50 dadurch unterscheidet, dass nicht nur ein mit Indikatorsubstanz 7 gefüllter Hohlzylinder seitlich am Kryoröhrchen befestigt ist, sondern mehrere, wobei sich die Indikatorsubstanzen 7a, 7b, 7c in den Hohlzylindern 52a, 552b, 52c in ihren Schmelzpunkten unterscheiden, so dass verschiedene Temperaturgrenzwerte überwacht werden können.

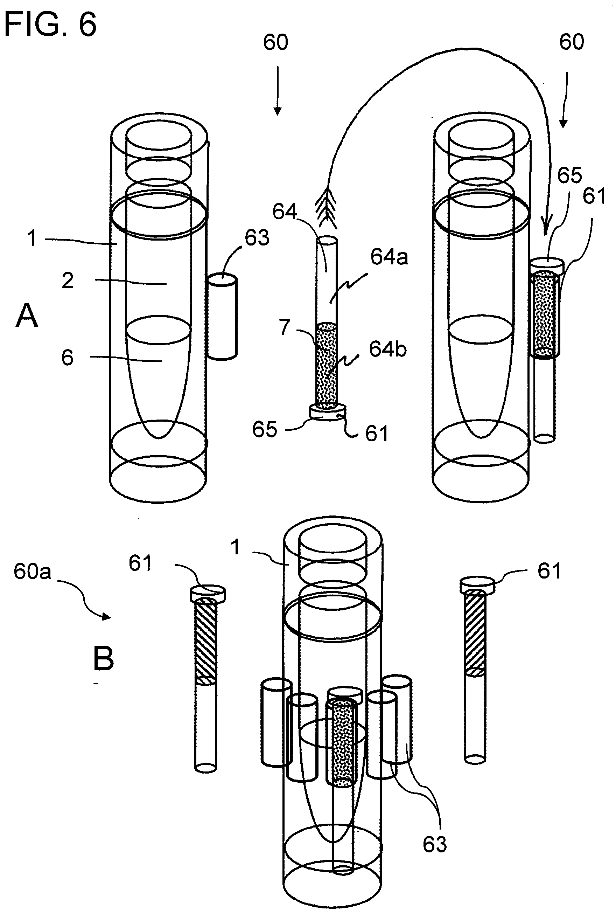

Figur 6 zeigt zwei weitere Vorrichtungen 60 und 60a zur Temperaturüberwachung einer kryokonservierten biologischen Probe. Figur 6 zeigt in der oberen Reihe A eine zylindrische Aufnahme 63 an der Außenwand des Kryoröhrchens 1, in die ein Hohlzylinder 61, dessen Innenraum 64 mit einer Indikatorsubstanz 7 teilgefüllt ist, hineingesteckt werden kann, wie es ganz rechts gezeigt ist. Die Scheibe 65 verhindert das Hindurchrutschen des Zylinders 61.

Analog zu den vorherigen Ausführungsvarianten wird die Indikatoreinrichtung in Form des teilgefüllten Hohlzylinders in einer ersten Lage unter den Schmelzpunkt der Indikatorflüssigkeit 7 abgekühlt. Figur 6A zeigt den Hohlzylinder 61 auf der Scheibe 65 stehend in dieser ersten Lage. Die Indikatorflüssigkeit fließt in den Teilbereich 64b und gefriert dort. Zur Kryolagerung wird der Hohlzylinder um 180° gedreht (zweite Lage) in die Aufnahme 63 eingesteckt, was rechts oben in Figur 6 dargestellt ist. In dieser Anordnung kann dann wieder geprüft werden, ob sich bei der Kryolagerung eine Lageveränderung der Indikatorsubstanz 7 im Innenraum 64 einstellt oder eingestellt hat.

Figur 6B zeigt, wie dieses Prinzip vervielfacht werden kann. Bei der Vorrichtung 60a sind mehrere Hohlzylinder 61 am Kryoröhrchen 1 befestigt, wobei sich die Indikatorsubstanzen in den Hohlzylindern 52a, 552b, 52c in ihren Schmelzpunkten unterscheiden, so dass verschiedene Temperaturgrenzwerte überwacht werden können.

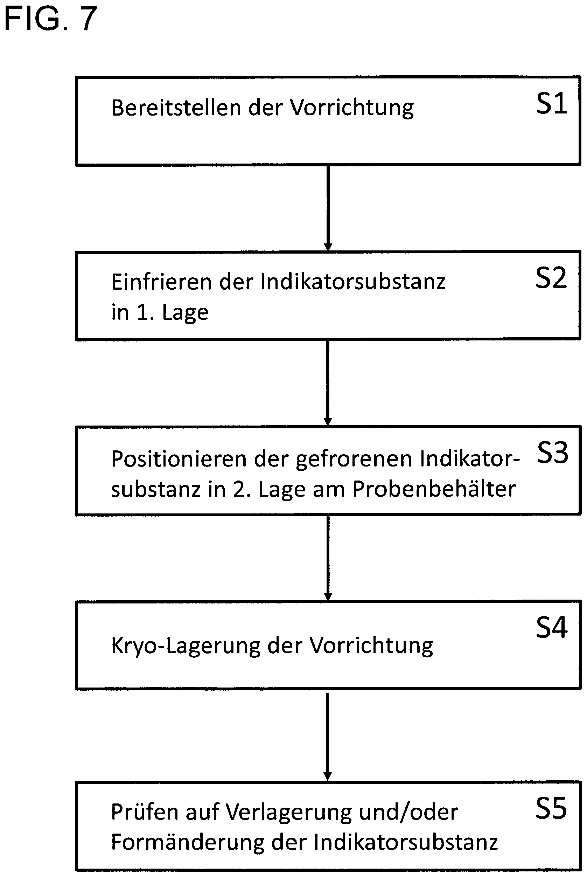

Figur 7 illustriert anhand eines Ablaufdiagramms ein Verfahren zur Temperaturüberwachung einer kryokonservierten biologischen Probe. In Schritt S1 wird eine Vorrichtung zur Temperaturüberwachung bereitgestellt, beispielsweise eine der Vorrichtungen 10, 20, 30, 40, 50, 50a, 60 oder 60a, wobei die Bereitstellung der Vorrichtungen 10, 50, 50a, 60 oder 60a nicht unter die vorliegende Erfindung fällt. Hierbei ist je nach Temperaturgrenzwert, der bei der Kryolagerung überwacht werden soll, eine geeignete Flüssigkeit oder ein Flüssigkeitsgemisch als Indikatorsubstanz 7 auszuwählen.

Über die Auswahl geeigneter Flüssigkeiten und das Mischungsverhältnis von Flüssigkeiten kann deren Schmelzpunkt auf einen gewünschten Wert in einem Bereich von -20 °C bis - 140 °C festgelegt werden.

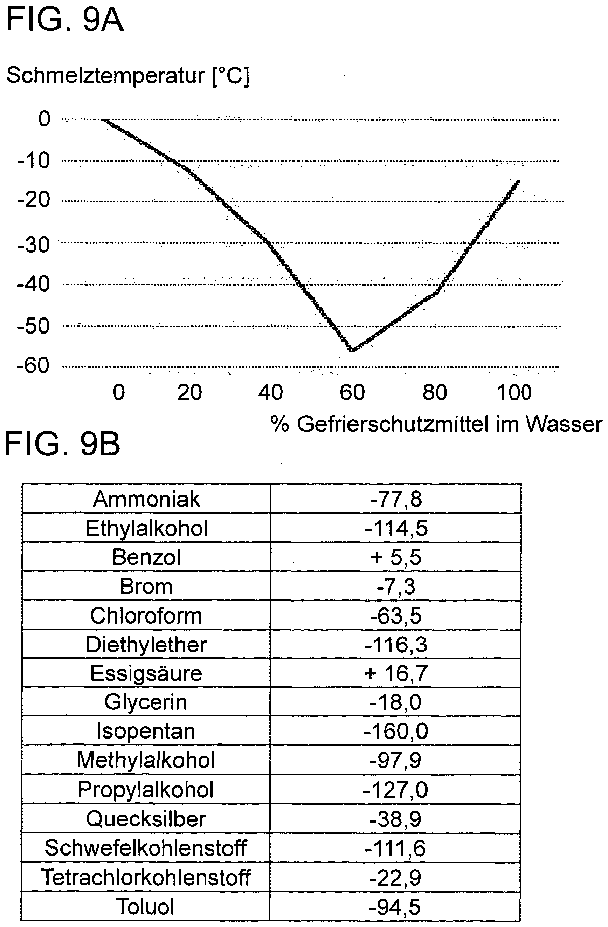

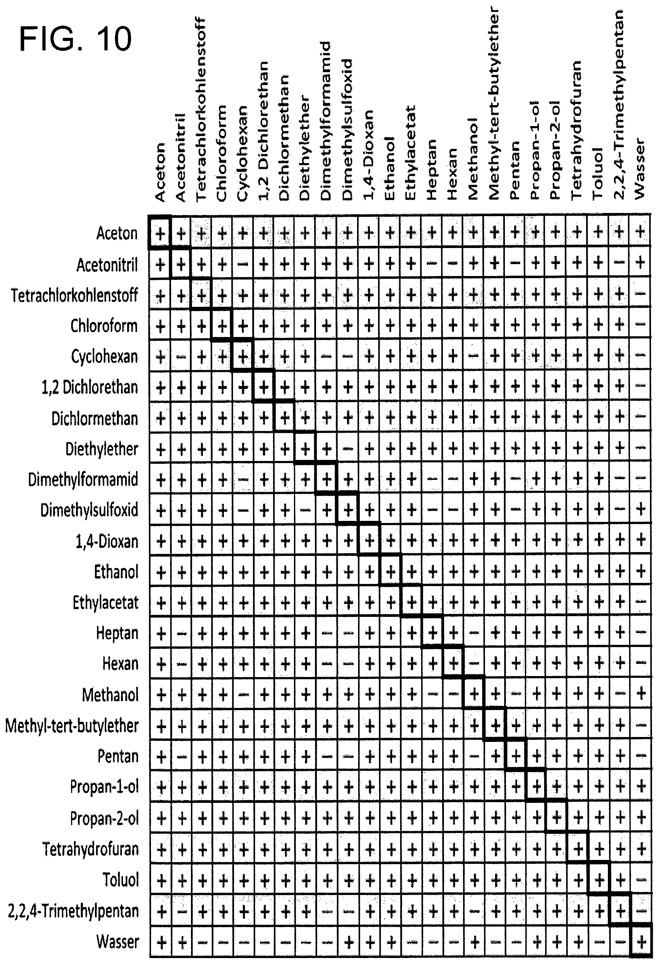

Beispielhaft ist in Figur 8A der Verlauf des Schmelzpunktes als Funktion des Mischungsverhältnisses aus einem Alkohol und Wasser angegeben, mit dem bei moderater Viskositätserhöhung mit abfallender Temperatur ein Temperaturbereich zwischen 0 °C und -118 °C abgedeckt werden kann. Soll z. B. ein Temperaturgrenzwert von -118 °C überwacht werden, kann der Ethanol-Anteil auf 93,5 % festgelegt werden. Schmelzpunkte bis zu einem Wert von knapp unter -60 °C können auch durch Zumischung von Kaliumhydroxid (KOH) zu Wasser eingestellt werden, was in Figur 8B anhand eines Schmelzdiagramms gezeigt ist. Auch eine Mischung aus Waser und Gefrierschutzmittel kann als Indikatorsubstanz verwendet werden, was durch das Schmelzdiagramm der Figur 9A illustriert ist. Die Tabelle der Figur 9B führt Gefrierpunkte/Schmelzpunkte weiterer reiner Flüssigkeiten auf, die alleine oder als Mischung mit einer anderen Flüssigkeit als Indikatorsubstanz verwendet werden können. Weitere als Indikatorsubstanz geeignete Flüssigkeitsgemische sind Chloroform-Zyklohexan-Gemische oder andere mischbare Flüssigkeiten, die z. B. aus der Mischbarkeitsmatrix von Lösemitteln der Figur 10 entnommen werden können.

Vornehmlich werden Flüssigkeiten und Plastikmaterialien mit guter Benetzbarkeit und niedriger Viskosität bei niedrigen Temperaturen ausgewählt, um die Lageveränderung möglichst umfangreich und die Zusatzkompartimente klein zu gestalten.

Falls mehrere Temperaturgrenzwerte bei der Kryolagerung überwacht werden sollen bzw. falls die erreichten Temperaturintervalle, in die die Probe gelangt ist, genauer eingegrenzt werden sollen, können entsprechend mehrere verschiedene Indikatorsubstanzen mit verschiedenen Schmelzpunkten verwendet werden, die dann in verschiedenen Hohlräumen bzw. Kammern am Probenbehälter angebracht werden.

In Schritt S2 wird dann die Indikatorsubstanz in dem Hohlraum der Indikatoreinrichtung eingefroren, wobei der Hohlraum während des Einfrierens der Indikatorsubstanz in eine erste Lage gebracht wird. Bei verschiedenen Indikatorsubstanzen und mehreren Hohlräumen werden diese analog jeweils in die erste Lage gebracht und eingefroren.

Danach wird in Schritt S3 der mindestens eine Hohlraum mit der gefrorenen Indikatorsubstanz in eine zweite Lage gebracht und, falls der mindestens eine Hohlraum noch nicht am Probenbehälter angeordnet ist, an diesem angeordnet. Die zweite Lage verändert die räumliche Lage der gefrorenen Indikatorsubstanz zumindest so weit, dass ein Schmelzen nach der Lageveränderung zu einer sichtbaren Verlagerung der Flüssigkeit oder ihrer Begrenzungsgeometrie in dem Hohlraum führt.

In diesem Zustand kann die Vorrichtung mit einer Kryoprobe im Aufnahmeraum des Probenbehälters bei einer Lagertemperatur unterhalb der Schmelztemperatur gelagert werden (Schritt S4).

Nachfolgend kann mittels der Indikatorsubstanz zu einem beliebigen Zeitpunkt während des Lagervorgangs überprüft werden, ob eine unerwünschte, wenn auch nur zeitweise Erwärmung der Kryoprobe stattgefunden hat (Schritt S5). Hierzu wird geprüft, ob eine durch einen Schmelzvorgang verursachte zumindest teilweise Verlagerung und/oder Formänderung der Indikatorsubstanz(en) stattgefunden hat. Ist dies der Fall, kann auf ein Überschreiten der zu überwachenden Grenztemperatur(en) geschlossen werden. Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

## Patentansprüche

1. Vorrichtung (20; 30; 40) zur Temperaturüberwachung einer kryokonservierten biologischen Probe, umfassend
a) einen Probenbehälter (1; 1b) mit einem Aufnahmeraum (2) zur Aufnahme einer biologischen Probe (6); und
b) eine außen am Probenbehälter anordenbare und/oder angeordnete Indikatoreinrichtung (21; 31; 41) zur Überwachung mindestens eines Temperaturgrenzwertes, aufweisend mindestens einen Hohlraum (24; 34; 44), der lediglich zum Teil mit einer Indikatorsubstanz (7) gefüllt ist, deren Schmelztemperatur in einem Bereich von -20 °C bis -140 °C liegt
**dadurch gekennzeichnet,** Variante i):
dass die Indikatoreinrichtung (41) als Bodenteil am Probenbehälter (1b) befestigt ist und an ihrer Unterseite mindestens eine Einstecköffnung (45) aufweist, in der ein Behälter,
insbesondere ein stiftförmiger Behälter (42), der lediglich zum Teil mit der Indikatorsubstanz gefüllt ist, lösbar gehaltert ist;
oder Variante ii):
dass der Probenbehälter ein Kryoröhrchen ist und die Indikatoreinrichtung als ein Hohlzylinder (21, 31) ausgeführt ist, der zur Befestigung am Kryoröhrchen auf eine äußere Mantelfläche des Kryoröhrchens (1) aufschiebbar ist und/oder aufgeschoben ist, wobei der Hohlzylinder (21, 31) doppelwandig mit einer Innenwandung (23) und einer Außenwandung (22) ausgeführt ist, wobei ein Zwischenraum (24) zwischen der Innenwandung (23) und der Außenwandung (22), die den mindestens einen Hohlraum ausbildet, zum Teil mit der Indikatorsubstanz gefüllt ist.

2. Vorrichtung nach Anspruch 1, **dadurch gekennzeichnet, dass** die Indikatoreinrichtung oder der zumindest eine Hohlraum der Indikatoreinrichtung
a) lösbar am Probenbehälter befestigbar und/oder befestigt ist; und/oder
b) mittels wenigstens einer Steckverbindung, Rastverbindung, Klemmverbindung, Schraubverbindung und/oder Klick-Verbindung lösbar am Probenbehälter befestigbar ist.

3. Vorrichtung nach Anspruch 1 oder 2, **dadurch gekennzeichnet, dass** die Indikatoreinrichtung an mindestens einer Stelle transparent oder semi-transparent ist, so dass der mindestens eine Hohlraum von außen beobachtbar ist.

4. Vorrichtung (40) nach einem der vorhergehenden Ansprüche gemäß Variante i), , **dadurch gekennzeichnet, dass** der Probenbehälter ein Kryoröhrchen ist und dass die Indikatoreinrichtung (41) als ein zylinderförmiger Körper ausgeführt ist, der als Bodenteil am Kryoröhrchen befestigbar ist.

5. Vorrichtung (40) nach Anspruch 4, **dadurch gekennzeichnet, dass** der zylinderförmige Körper
a) den gleichen Außendurchmesser wie das Kryoröhrchen aufweist und/oder
b) transparent oder semitransparent ausgeführt ist.

6. Vorrichtung (30) nach einem der vorhergehenden Ansprüche gemäß Variante ii), **dadurch gekennzeichnet, dass** der Hohlzylinder (21, 31) aus einem ersten Kunststoffmaterial und das Kryoröhrchen (1) aus einem zweiten Kunststoffmaterial hergestellt sind, wobei das erste Kunststoffmaterial bei einer Temperaturverringerung, zumindest in einem Temperaturbereich unterhalb der Schmelztemperatur der Indikatorsubstanz, eine größere thermische Kontraktion als das zweite Kunststoffmaterial aufweist.

7. Vorrichtung nach einem der vorhergehenden Ansprüche, **gekennzeichnet durch** eine optische oder optoelektrische Messeinrichtung, die ausgebildet ist, eine Lage und/oder Form der Indikatorsubstanz in dem mindestens einen Hohlraum der Indikatoreinrichtung zu erfassen.

8. Verfahren zur Temperaturüberwachung von kryokonservierten Proben, umfassend die Schritte:
a) Bereitstellen einer Vorrichtung zur Temperaturüberwachung nach einem der vorhergehenden Ansprüche (S1);
b) Einfrieren der Indikatorsubstanz(en), wobei der mindestens eine Hohlraum der Indikatoreinrichtung während des Einfrierens der Indikatorsubstanz(en) in eine erste Lage gebracht wird (S2) und nach dem Einfrieren und bei einer Temperatur der Indikatorsubstanz(en) unterhalb der Schmelztemperatur in eine zweite Lage gebracht wird (S3), in der ein Schmelzen der Indikatorsubstanz(en) durch den Einfluss der Schwerkraft zu einer zumindest teilweisen Verlagerung und/oder Formänderung der Indikatorsubstanz in dem mindestens einen Hohlraum führt.

9. Verfahren nach Anspruch 8, **dadurch gekennzeichnet, dass** eine Substanz als Indikatorsubstanz ausgewählt wird, deren Schmelztemperatur oder deren Schwellentemperatur, bei der die Viskosität der geschmolzenen Indikatorsubstanz einen bestimmten Zielwert unterschreitet, einer vorbestimmten Grenztemperatur, deren Überschreiten überwacht werden soll, entspricht.

10. Verfahren nach Anspruch 8 oder 9, **gekennzeichnet durch**
a) das Lagern einer kryokonservierten Probe in dem Probenbehälter (S4); und
b) das Feststellen, ob eine durch ein zeitweises Überschreiten der Schmelztemperatur der Indikatorsubstanz erfolgte Änderung der Form, Anordnung, insbesondere Lage, der Indikatorsubstanz stattgefunden hat (S5).

11. Vorrichtung oder Verfahren nach einem der vorhergehenden Ansprüche, **dadurch gekennzeichnet, dass** die Indikatorsubstanz mindestens einen Alkohol, welcher aus der Gruppe, die Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst, ausgewählt ist, sowie optional mindestens einen Farbstoff umfasst.

12. Vorrichtung oder Verfahren nach Anspruch 11, **dadurch gekennzeichnet, dass** der Farbstoff aus der Gruppe ausgewählt ist, welche Triphenylmethanfarbstoffe, Rhodaminfarbstoffe, insbesondere Xanthene, Azofarbstoffe sowie Phenazin- und Phenothiazinfarbstoffe umfasst.

13. Vorrichtung oder Verfahren nach Anspruch 11 oder 12, **dadurch gekennzeichnet, dass** die Indikatorsubstanz mindestens zwei Alkoholkomponenten, welche aus der Gruppe, die Octan-1-ol, Nonan-1-ol, Propan-1,2-diol, Propan-1,3-diol, Butan-1,2-diol, Butan-1,3-diol, Butan-2-ol, Pentan-1,5-diol, Pentan-1-ol, Cyclopentanol, Benzylalkohol umfasst, ausgewählt sind, umfasst und/oder die Indikatorsubstanz mindestens einen Farbstoff umfasst, der aus der Gruppe ausgewählt ist, welche Oil Red, Methylrot, Brillantgrün, Rhodamin B, Neutralrot, Methylenblau oder andere Farbstoffe, die zur Anfärbung von Zellen in der Zytologie verwendet werden, umfasst.

## Claims

1. Device (20; 30; 40) for temperature monitoring of a cryopreserved biological sample, comprising
a) a sample container (1; 1b) with a receiving space (2) for receiving a biological sample (6); and
b) an indicator apparatus (21; 31; 41) which can be arranged and/or is arranged on the outside of the sample container for monitoring at least one temperature threshold value, having at least one cavity (24; 34; 44) which is only partially filled with an indicator substance (7), the melting temperature of which lies in a range from -20°C to -140°C **characterized in**
variant i):
that the indicator apparatus (41) is fastened as a base part to the sample container (1b) and
has on its underside at least one insertion opening (45), in which a container, in particular a pin-shaped container (42), which is only partially filled with the indicator substance, is detachably retained;
or variant ii):
that the sample container is a cryogenic tube and the indicator apparatus is embodied as a hollow cylinder (21; 31), which, for fastening to the cryogenic tube, can be pushed and/or is pushed onto an outer shell surface of the cryogenic tube (1), wherein the hollow cylinder (21; 31) is embodied to be double-walled with an inner wall (23) and an outer wall (22), wherein an intermediate space (24) between the inner wall (23) and the outer wall (22), which forms the at least one cavity, is partially filled with the indicator substance.

2. Device according to Claim 1, **characterised in that** the indicator apparatus or the at least one cavity of the indicator apparatus
a) can be fastened and/or is fastened detachably to the sample container; and/or
b) can be fastened detachably to the sample container by means of at least one plug connection, latching connection, clamping connection, screw connection and/or click connection.

3. Device according to Claim 1 or 2, **characterised in that** the indicator apparatus at at least one point is transparent or semi-transparent so that the at least one cavity is observable from the outside.

4. Device (40) according to any of the preceding claims in accordance with variant i), **characterised in that** the sample container is a cryogenic tube and the indicator apparatus (41) is embodied as a cylindrical body which can be fastened as a base part to the cryogenic tube.

5. Device (40) according to Claim 4, **characterised in that** the cylindrical body
a) has the same outer diameter as the cryogenic tube and/or
b) is embodied to be transparent or semi-transparent.

6. Device (30) according to any of the preceding claims in accordance with variant ii), **characterised in that** the hollow cylinder (21; 31) is produced from a first plastic material and the cryogenic tube (1) is produced from a second plastic material, wherein the first plastic material has a greater thermal contraction than the second plastic material in the case of a reduction in temperature, at least in a temperature range below the melting temperature of the indicator substance.

7. Device according to any one of the preceding claims, **characterised by** an optical or optoelectric measuring apparatus which is configured to detect a position and/or form of the indicator substance in the at least one cavity of the indicator apparatus.

8. Method for temperature monitoring of cryopreserved samples, comprising the steps:
a) providing a device for temperature monitoring according to any one of the preceding claims (S1);
b) freezing the indicator substance(s), wherein
the at least one cavity of the indicator device is moved into a first position during freezing of the indicator substance(s) (S2) and, after freezing and at a temperature of the indicator substance(s) below the melting temperature, is moved into a second position (S3) in which a melting of the indicator substance(s) leads, as a result of the influence of gravity, to an at least partial displacement and/or change in shape of the indicator substance(s) in the at least one cavity.

9. Method according to Claim 8, **characterised in that** a substance is selected as the indicator substance, the melting temperature of which or the threshold temperature of which, at which the viscosity of the melted indicator substance exceeds a determined setpoint value, corresponds to a predetermined threshold temperature, the exceeding of which should be monitored.

10. Method according to Claim 8 or 9, **characterised by**
a) storing of a cryopreserved sample in the sample container (S4); and
b) determining whether a change in form, arrangement, in particular position, of the indicator substance performed by temporarily exceeding the melting temperature of the indicator substance has taken place (S5).

11. Device or method according to any one of the preceding claims, **characterised in that** the indicator substance comprises at least one alcohol which is selected from the group which comprises octan-1-ol, nonan-1-ol, propane-1,2-diol, propane-1,3-diol, butane-1,2-diol, butane-1,3-diol, butane-2-ol, pentane-1,5-diol, pentan-1-ol, cyclopentanol, benzyl alcohol as well as optionally at least one dye.

12. Device or method according to Claim 11, **characterised in that** the dye is selected from the group which comprises triphenylmethane dyes, rhodamine dyes, in particular xanthene, azo dyes as well as phenazine and phenothiazine dyes.

13. Device or method according to Claim 11 or 12, **characterised in that** the indicator substance comprises at least two alcohol components which are selected from the group which comprises octan-1-ol, nonan-1-ol, propane-1,2-diol, propane-1,3-diol, butane-1,2-diol, butane-1,3-diol, butane-2-ol, pentane-1,5-diol, pentan-1-ol, cyclopentanol, benzyl alcohol and/or the indicator substance comprises at least one dye which is selected from the group which comprises oil red, methyl red, brilliant green, rhodamine B, neutral red, methylene blue or other dyes which are used to colour cells in cytology.

## Revendications

1. Dispositif (20 ; 30 ; 40) de surveillance de la température d'un échantillon biologique cryoconservé, comprenant
a) un récipient d'échantillon (1; 1b) avec un espace de réception (2) pour la réception d'un échantillon biologique (6) ; et
b) un dispositif indicateur (21 ; 31 ; 41) agencé et/ou pouvant être agencé à l'extérieur au niveau du récipient d'échantillon pour la surveillance d'au moins une valeur limite de température, présentant au moins un espace creux (24 ; 34 ; 44), qui est rempli juste en partie avec une substance indicatrice (7), dont la température de fusion se trouve dans une plage de -20 °C à -140 °C,
**caractérisé en ce**
variante i) :
que le dispositif indicateur (41) est fixé comme partie de fond au récipient d'échantillon (1b) et présente au niveau de son côté inférieur au moins une ouverture d'enfichage (45), dans laquelle un récipient, en particulier un récipient (42) en forme de tige qui est rempli juste en partie avec la substance indicatrice, est maintenu de manière amovible ;
ou variante ii) :
que le récipient d'échantillon est un tube cryogénique et le dispositif indicateur est réalisé comme un cylindre creux (21, 31) qui peut être enfoncé et/ou est poussé pour la fixation au tube cryogénique sur une surface enveloppe extérieure du tube cryogénique (1), dans lequel le cylindre creux (21, 31) est réalisé à double paroi avec une paroi intérieure (23) et une paroi extérieure (22), dans lequel un espace intermédiaire (24) est rempli entre la paroi intérieure (23) et la paroi extérieure (22) qui réalise l'au moins un espace creux, en partie avec la substance indicatrice.

2. Dispositif selon la revendication 1, **caractérisé en ce que** le dispositif indicateur ou l'au moins un espace creux du dispositif indicateur
a) est ou peut être fixé de manière amovible au récipient d'échantillon ; et/ou
b) peut être fixé de manière amovible au récipient d'échantillon au moyen d'au moins une liaison d'enfichage, une liaison de verrouillage, une liaison de serrage, une liaison de vissage et/ou une liaison d'encliquetage.

3. Dispositif selon la revendication 1 ou 2, **caractérisé en ce que** le dispositif indicateur est à au moins un endroit transparent ou semi-transparent de sorte que l'au moins un espace creux puisse être observé de l'extérieur.

4. Dispositif (40) selon l'une des revendications précédentes selon la variante i), **caractérisé en ce que** le récipient d'échantillon est un tube cryogénique et que le dispositif indicateur (41) est réalisé comme un corps cylindrique qui peut être fixé comme partie de fond au tube cryogénique.

5. Dispositif (40) selon la revendication 4, **caractérisé en ce que** le corps cylindrique
a) présente le même diamètre extérieur que le tube cryogénique et/ou
b) est réalisé de manière transparente ou semi-transparente.

6. Dispositif (30) selon l'une des revendications précédentes selon la variante ii), **caractérisé en ce que** le cylindre creux (21, 31) est fabriqué à partir d'un premier matériau plastique et le tube cryogénique (1) est fabriqué à partir d'un second matériau plastique, dans lequel le premier matériau plastique présente lors d'une diminution de température, au moins dans une plage de température en dessous de la température de fusion de la substance indicatrice, une contraction thermique supérieure à celle du second matériau plastique.

7. Dispositif selon l'une des revendications précédentes, **caractérisé par** un dispositif de mesure optique ou optoélectrique qui est réalisé afin de détecter une position et/ou une forme de la substance indicatrice dans l'au moins un espace creux du dispositif indicateur.

8. Procédé de surveillance de la température d'échantillons cryoconservés, comprenant les étapes :
a) la fourniture d'un dispositif de surveillance de température selon l'une des revendications précédentes (S1) ;
b) la congélation de la/des substance(s) indicatrice(s), dans lequel
l'au moins un espace creux du dispositif indicateur est amené pendant la congélation de la/des substance(s) indicatrice(s) dans une première position (S2) et après la congélation et à une température de la/des substance(s) indicatrices en dessous de la température de fusion dans une seconde position (S3), dans laquelle une fonte de la/des substance(s) indicatrices mène sous l'influence de la force de gravité à un déplacement au moins partiel et/ou une modification de forme de la substance indicatrice dans l'au moins un espace creux.

9. Procédé selon la revendication 8, **caractérisé en ce qu'**une substance est sélectionnée comme substance indicatrice, dont la température de fusion ou la température seuil, à laquelle la viscosité de la substance indicatrice fondue n'atteint pas une valeur cible déterminée, correspond à une température limite prédéterminée, dont le dépassement doit être surveillé.

10. Procédé selon la revendication 8 ou 9, **caractérisé par**
a) le stockage d'un échantillon cryoconservé dans le récipient d'échantillon (S4) ; et
b) le fait de constater si une modification effectuée par un dépassement temporaire de la température de fusion de la substance indicatrice de la forme, de l'agencement, en particulier de la position, de la substance indicatrice a eu lieu (S5).

11. Dispositif ou procédé selon l'une des revendications précédentes selon la variante ii), **caractérisé en ce que** la substance indicatrice comporte au moins un alcool qui est sélectionné à partir du groupe qui comporte de l'octan-1-ol, du nonan-1-ol, du propane-1,2-diol, du propane-1,3-diol, du butane-1,2-diol, du butane-1,3-diol, du butane-2-ol, du pentane-1,5-diol, du pentane-1-ol, du cyclopentanol, de l'alcool benzylique, ainsi que comporte en option au moins un colorant.

12. Dispositif ou procédé selon la revendication 11, **caractérisé en ce que** le colorant est sélectionné à partir du groupe qui comporte des colorants de triphénylméthane, des colorants de rhodamine, en particulier du xanthène, des colorants azoïques ainsi que des colorants de phénazine et de phénothiazine.

13. Dispositif ou procédé selon la revendication 11 ou 12, **caractérisé en ce que** la substance indicatrice comporte au moins deux composants d'alcool, qui sont sélectionnés à partir du groupe qui comporte de l'octane-1-ol, du nonan-1-ol, du propane-1,2-diol, du propane-1,3-diol, du butane-1,2-diol, du butane-1,3-diol, du butane-2-ol, du pentane-1,5-diol, du pentane-1-ol, du cyclopentanol, de l'alcool benzylique, et/ou la substance indicatrice comporte au moins un colorant qui est sélectionné à partir du groupe qui comporte de l'Oil Red, du rouge de méthyle, du vert brillant, de la rhodamine B, du rouge neutre, du bleu de méthylène ou d'autres colorants qui sont utilisés pour la coloration de cellules dans la cytologie.
